# EUROPÄISCHE PATENTSCHRIFT

(11) **EP 1 482 268 B1**
(45) Veröffentlichungstag und Bekanntmachung des Hinweises auf die Patenterteilung: **07.12.2005**
(21) Anmeldenummer: 03021765.7
(22) Anmeldetag: 25.09.2003
(51) Int. Cl.: F27B 17/02, A61C 13/20

(54) **Ofen für die Herstellung von Zahnersatz oder-teilersatz**
Oven for production of dental prostheses or partial prostheses
Four pour la production de prothèses dentaires ou de prothèses partielles

(30) Priorität: 28.05.2003 DE 20308406 U
(43) Veröffentlichungstag der Anmeldung: 01.12.2004
(73) Patentinhaber: Dekema Dental-Keramiköfen GmbH, 83395 Freilassing (DE)
(72) Erfinder: Miller, Stephan, Dr., 83278 Traunstein (DE)
(74) Vertreter: Manitz, Finsterwald & Partner GbR

(56) Entgegenhaltungen:
- DE-A- 19 753 895
- GB-A- 334 963
- US-A- 5 432 319
- US-B1- 6 386 265

## Beschreibung

Die vorliegende Erfindung betrifft einen Ofen für Zahnersatz oder -teilersatz mit einer Brennkammer und einer in der Brennkammer angeordneten Heizeinrichtung mit einer Heizwendel aus geeignetem Heizdraht und einem Träger für die Heizwendel.

Bei bekannten Öfen der genannten Art wird als Heizeinrichtung eine an der Innenseite der Brennkammer herumgeführte, rohrförmige Glaswendel verwendet, in welcher ein in sich ebenfalls gewendelter Heizdraht angeordnet ist. Die Heizwendel ist auf diese Weise gut geführt und geschützt. Die Heizeinrichtung kann auch einfach ausgewechselt werden, und es findet kein direkter Energieübertrag an die Wände der Brennkammer statt.

Nachteilig ist bei Öfen mit einer solchen Heizeinrichtung aber, dass die Trägerwendel aus Quarzglas hergestellt sein muss, da die Öfen auch mit Unterdruck in der Brennkammer betrieben werden, so dass im Wesentlichen nur die Strahlungswärme zur Verfügung steht. Aber auch bei Verwendung von Quarzglas wird ein Teil der Strahlung absorbiert. Zudem kann das Quarzglas mit der Zeit beschlagen oder sogar erblinden.

Bei anderen Öfen für Zahnersatz oder -teilersaz, wie z.B US 5432319, ist die Heizwendel in die Wände der Brennkammer eingebettet. Da sich die Ausdehnungskoeffizienten der Heizwendel und des Wandmaterials voneinander unterscheiden, besteht die Gefahr, dass das Wandmaterial springt. Des Weiteren gibt die eingebettete Heizwendel Energie im wesentlichen Umfang auch direkt an die Wände ab, so dass starke Wärmeverluste entstehen. Ein weiterer Nachteil besteht darin, dass die Strahlung der eingebetteten Teile der Heizwendel nicht benützt werden kann. Schließlich ist auch der Austausch der Heizeinrichtung schwierig, da die Heizwendel, falls überhaupt, nur zusammen mit der Einbettmasse ausgetauscht werden kann.

Der Erfindung liegt die Aufgabe zugrunde, einen Ofen der eingangs genannten Art anzugeben, der diese Nachteile nicht aufweist. Insbesondere soll er mit einer Heizeinrichtung ausgerüstet sein, die eine gute Ausnutzung der Strahlungswärme ermöglicht, einfach auswechselbar ist und so wenig wie möglich Energie an die Brennkammerwände und/oder das Trägermaterial verliert.

Diese Aufgabe wird dadurch gelöst, dass die Heizwendel außen um die Windungen des Trägers gewendelt ist.

Durch die Anordnung der Heizwendel außen auf dem Träger liegt die Heizwendel frei, so dass das gesamte Strahlungsspektrum genutzt werden kann. Dennoch ist die Heizeinrichtung leicht auswechselbar, da die Heizwendel zusammen mit dem Träger entnommen werden kann. Weitere Vorteile bestehen darin, dass kein direkter Energieübertrag an die Isolierung der Brennkammer erfolgt, dass als Träger auch andere hitzebeständige Materialien verwendet werden können, auch solche, die eine höhere Hitzebeständigkeit aufweisen als Quarzglas, und dass vorhandene Heizeinrichtungen mit einer in einem Träger angeordneten Heizwendel gegen die neue Heizeinrichtung ausgetauscht werden können.

Als Träger kommen alle entsprechend temperaturresistenten und ausreichend stabilen Materialien in Betracht.

Der Träger für die Heizwendel kann beispielsweise aus Glas bestehen. Wird Quarzglas verwendet, so kann auch die Strahlung der auf der Rückseite des Trägers liegenden Windungen der Heizwendel ausgenutzt werden.

Als Trägermaterial kann auch Keramik verwendet werden, insbesondere hochhitzefeste Keramik wie beispielsweise Aluminiumoxid oder Zirkonoxid. Dadurch kann mit besonders hohen Temperaturen gearbeitet werden.

Nach einer bevorzugten Ausgestaltung der Erfindung ist der Träger rohrförmig ausgebildet. Damit wird die Trägerstruktur stabiler, Material eingespart, und die Massenträgheit und Energieaufnahme des Trägers sind verringert.

Um die Brennkammer möglichst optimal erwärmen zu können, ist der Träger mit der Heizwendel selbst wendelförmig ausgebildet. Er kann dadurch an der Innenseite der Brennkammerwände angeordnet werden und den Brennraum von allen Seiten umgeben.

Nach einer weiteren Ausgestaltung der Erfindung ist der Träger länger als die Heizwendel insbesondere um etwa eine Windung. Die zusätzliche Windung kann dazu dienen, den Träger mit der Heizwendel auf dem Boden der Brennkammer abzustützen.

Der Durchmesser der zusätzlichen Windung des Trägers ist bevorzugt größer als seine übrigen Windungen. Dadurch wird auf einfache Weise ein Abstand zwischen der Heizwendel und den Wänden der Brennkammer sichergestellt und damit eine direkte Erwärmung der Brennkammerwände verhindert.

Um zu verhindern, dass die Heizwendel auf dem Träger verrutscht, ist dieser bevorzugt mit Haltemitteln versehen. Beispielsweise kann der Träger einen Knick aufweisen.

Eine andere Möglichkeit, die Heizeinrichtung in der Brennkammer abzustützen, besteht darin, ein Ende des Trägers abgewinkelt auszubilden und in eine entsprechende Ausnehmung im Boden der Brennkammer einzusetzen. Auch damit kann ein stabiler Aufbau erreicht werden.

Zwei Ausführungsbeispiele der Erfindung sind in den Zeichnungen dargestellt und werden nachfolgend beschrieben.

Es zeigen, jeweils in schematischer Darstellung,
- Fig. 1: eine erste erfindungsgemäße Heizwendel mit Träger,
- Fig. 2: 2 zweite erfindungsgemäße Heizwendel mit Träger,
- Fig. 3: den Träger von Fig. 1 ohne Heizwendel und
- Fig. 4: die Heizwendel von Fig. 1 und Fig. 2 ohne Träger.

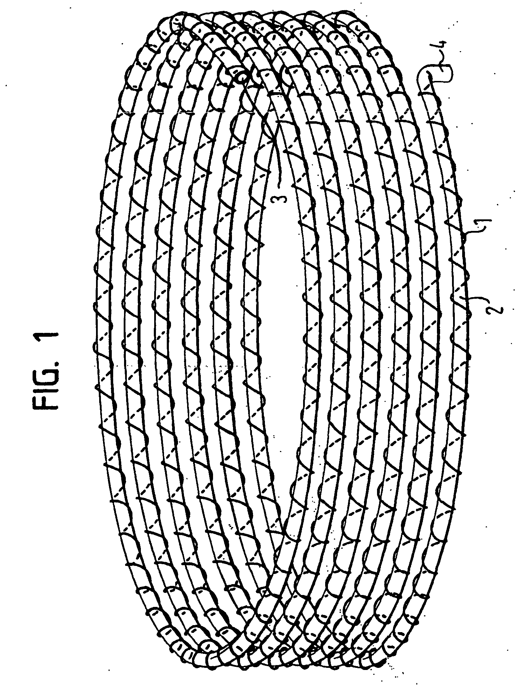

Figur 1 zeigt eine Heizwendel 1 aus einem geeigneten Heizdraht, die eine Vielzahl von Windungen aufweist und auf einem Glasrohr 2 als Träger angeordnet ist. Das Glasrohr 2 ist ebenfalls wendelförmig ausgebildet und weist sechs übereinander angeordnete Windungen auf. Entsprechend ist auch die Heizwendel 1 zusammen mit dem Glasrohr 2 mit sechs großen Windungen ausgebildet.

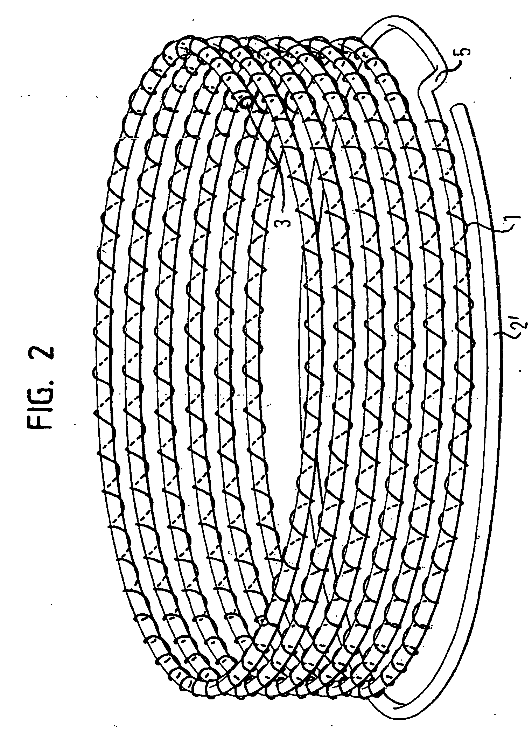

Das obere Ende 3 des Glasrohres 2 ist gerade ausgebildet, während das untere Ende 4 abgewinkelt ist. Das abgewinkelte Ende 4 des Gasrohres 2 verhindert zum einen ein Verrutschen der Heizwendel 1 auf dem Glasrohr 2 und dient andererseits zur Befestigung des Glasrohres 2 in der hier nicht dargestellten Brennkammer. Hiefür weist die Brennkammer in ihrem Boden eine entsprechende Ausnehmung auf, in welche das abgewinkelte Ende 4 des Glasrohres 2 eingesetzt wird. Anstelle des abgewinkelten Endes 4 kann das Glasrohr 2, wie in Figur 2 dargestellt, auch mit einer zusätzlichen Windung versehen sein, die sich auf dem Boden der Brennkammer abstützt. Die zusätzliche Windung hat einen größeren Durchmesser als die übrigen Windungen, um einen Abstand der Heizwendel 1 von den Wänden der Brennkammer sicherzustellen. Außerdem ist das Glasrohr 2' in diesem Fall mit einem Knick 5 versehen sein, um ein Verrutschen der Heizwendel 1 auf dem Glasrohr 2' zu verhindern.

Als Glas kann Quarzglas oder auch normales Glas verwendet werden. Außerdem kann auch anderes hitzefestes Material verwendet werden, beispielsweise Keramik. Wichtig ist, dass das Trägermaterial im entsprechenden Temperaturbereich einsetzbar ist und ausreichende Stabilität aufweist.

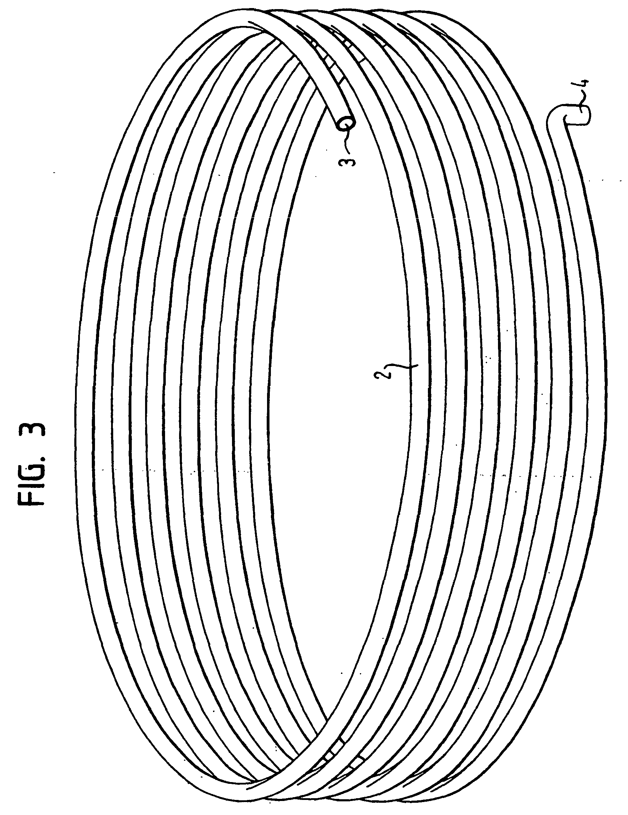

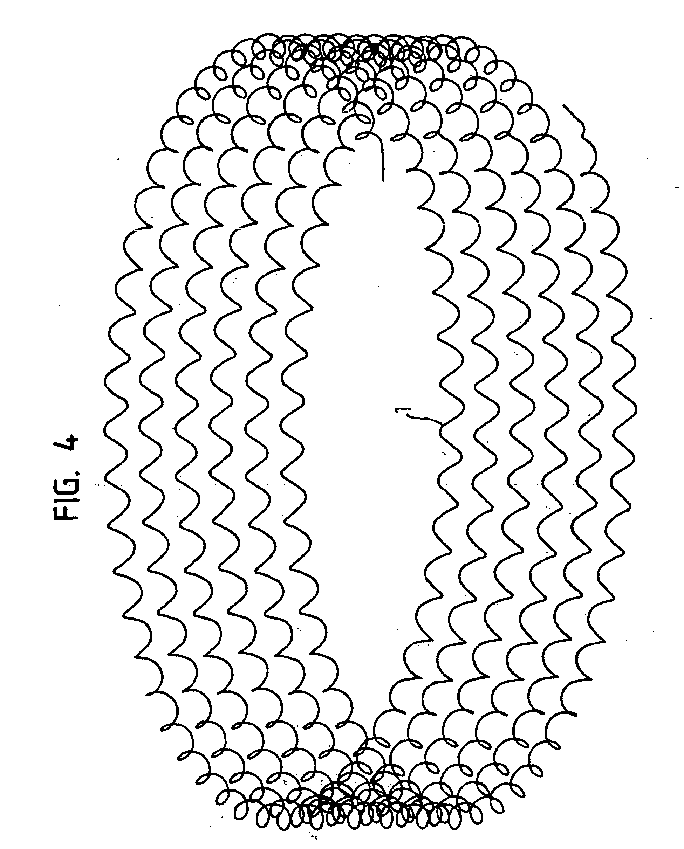

Die Herstellung eines erfindungsgemäßen Ofens mit der in Figur 1 dargestellten Heizeinrichtung kann beispielsweise so erfolgen, dass ein Glasrohr 2 in der in Figur 3 dargestellten Weise als Wendel ausgebildet wird. Des Weiteren wird eine Heizwendel 1 in der in Figur 4 dargestellten Weise mit einer Vielzahl von kleinen Windungen mit einer entsprechenden Anzahl von großen Windungen ausgebildet. Sodann wird das Glasrohr 2 in die Hohlseele der Heizwendel 1 eingeführt, bis die Heizwendel 1 am abgewinkelten Ende 4 des Glasrohres 2 anschlägt. Anschließend wird das Glasrohr 2 mit der Heizwendel 1 in die Brennkammer eingesetzt und über das abgewinkelte Ende 4 im Boden der Brennkammer verankert.

Die Herstellung eines Ofens mit der in Figur 2 dargestellten Heizeinrichtung erfolgt entsprechend, wobei die Heizwendel am Knick 5 des Glasrohres 2' anschlägt und die unterste Windung desselben mit dem vergrößerten Durchmesser für eine Fixierung der Heizeinrichtung in der Brennkammer sorgt.

### Bezugszeichenliste

- 1: Heizwendel
- 2, 2': Glasrohr
- 3: gerades Ende von 2
- 4: abgewinkeltes Ende von 2
- 5: Knick in 2'

## Patentansprüche

1. Ofen für Zahnersatz oder -teilersatz mit einer Brennkammer und einer in der Brennkammer angeordneten Heizeinrichtung mit einer aus einem Heizdraht gebildeten Heizwendel (1) und einem wendelförmigen Träger (2, 2') für die Heizwendel (1),
**dadurch gekennzeichnet,**
**dass** die Heizwendel (1) außen um die Windungen des Trägers (2, 2') gewendelt ist.

2. Ofen nach Anspruch 1,
**dadurch gekennzeichnet,**
**dass** der Träger (2, 2') aus Glas besteht.

3. Ofen nach Anspruch 2,
**dadurch gekennzeichnet,**
**dass** der Träger (2, 2') aus Quarzglas besteht.

4. Ofen nach Anspruch 1,
**dadurch gekennzeichnet,**
**dass** der Träger (2, 2') aus Keramik besteht.

5. Ofen nach einem der vorhergehenden Ansprüche,
**dadurch gekennzeichnet,**
**dass** der Träger (2, 2') rohrförmig ausgebildet ist.

6. Ofen nach einem der vorhergehenden Ansprüche,
**dadurch gekennzeichnet,**
**dass** die Trägerwindungen an der Innenseite der Brennkammer herumgeführt sind.

7. Ofen nach einem der vorhergehenden Ansprüche,
**dadurchgekennzeichnet**,
dass der Träger (2') länger ist als die Heizwendel (1), insbesondere um etwa eine Windung.

8. Ofen nach Anspruch 7,
**dadurch gekennzeichnet,**
**dass** der Durchmesser der zusätzlichen Windung des Trägers (2') größer ist als seine übrigen Windungen.

9. Ofen nach einem der vorhergehenden Ansprüche,
**dadurch gekennzeichnet,**
**dass** der Träger (2, 2') mit Haltemitteln (4, 5) zum Verhindern eines Verrutschens der Heizwendel (1) gegenüber dem Träger (2, 2') versehen ist.

10. Ofen nach einem der vorhergehenden Ansprüche,
**dadurch gekennzeichnet ,**
**dass** ein Ende (4) des Trägers (2) abgewinkelt ausgebildet und in eine entsprechende Ausnehmung im Boden der Brennkammer eingesetzt ist.

## Claims

1. An oven for dental prostheses or partial dental prostheses comprising a firing chamber and a heating device arranged in the firing chamber and having a heating filament (1) formed from a heating wire and a helically shaped carrier (2, 2') for the heating filament (1),
**characterised in that**
the heating filament (1) is wound outwardly around the turns of the carrier (2, 2').

2. An oven in accordance with claim 1, **characterised in that** the carrier (2, 2') consists of glass.

3. An oven in accordance with claim 2, **characterised in that** the carrier (2, 2') consists of quartz glass.

4. An oven in accordance with claim 1, **characterised in that** the carrier (2, 2') consists of a ceramic material.

5. An oven in accordance with any one of the preceding claims, **characterised in that** the carrier (2, 2') is tubular.

6. An oven in accordance with any one of the preceding claims, **characterised in that** the carrier turns are guided around at the inner side of the firing chamber.

7. An oven in accordance with any one of the preceding claims, **characterised in that** the carrier (2') is longer than the heating filament (1), in particular by approximately one turn.

8. An oven in accordance with claim 7, **characterised in that** the diameter of the additional turn of the carrier (2') is larger than its other turns.

9. An oven in accordance with any one of the preceding claims, **characterised in that** the carrier (2, 2') is provided with holding means (4, 5) to prevent a slipping of the heating filament (1) with respect to the carrier (2, 2').

10. An oven in accordance with any one of the preceding claims, **characterised in that** one end (4) of the carrier (2) is angled and is inserted into a corresponding recess in the base of the firing chamber.

## Revendications

1. Four pour prothèses dentaires totales ou partielles, comportant une chambre de cuisson et un dispositif de chauffage agencé dans la chambre de cuisson et pourvu d'un filament de chauffage (1) formé par un fil chauffant et d'un support spiralé (2, 2') pour le filament de chauffage (1), **caractérisé en ce que** le filament de chauffage (1) est spiralé à l'extérieur autour des spires du support (2, 2').

2. Four selon la revendication 1, **caractérisé en ce que** le support (2, 2') est constitué en verre.

3. Four selon la revendication 2, **caractérisé en ce que** le support (2, 2') est constitué en verre de quartz.

4. Four selon la revendication 1, **caractérisé en ce que** le support (2, 2') est constitué en céramique.

5. Four selon l'une des revendications précédentes, **caractérisé en ce que** le support (2, 2') est réalisé en forme tubulaire.

6. Four selon l'une des revendications précédentes, **caractérisé en ce que** les spires du support sont menées sur le pourtour du côté intérieur de la chambre de cuisson.

7. Four selon l'une des revendications précédentes, **caractérisé en ce que** le support (2') est plus long que le filament chauffant (1), en particulier d'environ une spire.

8. Four selon la revendication 7, **caractérisé en ce que** le diamètre de la spire supplémentaire du support (2') est plus grand que celui de ses autres spires.

9. Four selon l'une des revendications précédentes, **caractérisé en ce que** le support (2, 2') est pourvu de moyens de retenue (4, 5) pour empêcher un ripage du filament chauffant (1) par rapport au support (2, 2').

10. Four selon l'une des revendications précédentes, **caractérisé en ce qu'**une extrémité (4) du support (2) est réalisée de façon coudée et mise en place dans un évidement correspondant dans le fond de la chambre de cuisson.
